# EUROPEAN PATENT APPLICATION

(11) **EP 1 482 075 A1**
(43) Date of publication of application: **01.12.2004**
(21) Application number: 04253151.7
(22) Date of filing: 27.05.2004
(51) Int. Cl.: C23C 24/00, C23C 28/00, F16J 9/26

(54) **Piston ring coating**

(30) Priority: 29.05.2003 US 474059 P
(71) Applicant: DANA CORPORATION, Toledo, OH 43615 (US)
(72) Inventor: Sytsma, Steven J., Muskegon Michigan 49444 (US); Smith, Thomas J., Muskegon Michigan 49441 (US)
(74) Representative: Giles, Ashley Simon

(57) **Abstract**

A system for preventing scuffing of a cylinder wall by a piston ring includes a piston ring, the piston ring including a surface, wherein the surface of the piston ring is coated with tungsten disulfide. The coating provides lubrication during the piston and piston ring break-in period and prevents localized high pressure and high temperature areas that produce scuffing.

## Description

### FIELD

The present system and method relate to lubricant compositions. More particularly, the present system and method relate to lubricant compositions for use in coating piston rings installed in internal combustion engines.

### BACKGROUND

Great strides have been made in extending the useful life of an internal combustion engine. Many of these improvements have been made possible by utilizing materials which reduce the friction between moving components used within the internal combustion engine. For example, coating the cylinder wall engaging surface of a piston ring with graphite, phosphate, or molybdenum to reduce the sliding friction between the piston ring and the cylinder wall is a known technique for reducing engine friction. It is also known to deposit polytetrafluoroethylene (PTFE) or a composition of a thermoset resin, polytetrafluoroethylene, and molydisulfide between rod bearings and respective crank journal faces of an internal combustion engine to minimize friction. In spite of these advancements, the interface between the piston ring and the wall of the cylinder bore remains a friction intense area of conventional engine designs which has not been adequately solved using even the most advanced friction reducing coatings.

In the vast majority of internal combustion engines which use reciprocating pistons, the pistons are surrounded by piston rings to create a relatively efficient gas and oil seal between the piston and the cylinder wall. Thus, when a charge within the engine cylinder is ignited, creating high combustion chamber pressures, the expanding gasses that are formed during the burning process are confined to the combustion chamber. The confined gases exert a translational force on the piston and are not permitted to escape between the piston and the cylinder wall. Although the piston ring is typically captured within a groove which is cut along an outside circumferential surface of the piston, the ring is sized relative to the groove so that it is free to move within the groove. It is important that the piston ring be movable (axially, radially, and circumferentially) with respect to the groove because its relative movement enables proper sealing to the cylinder bore as the piston moves axially and radially, and as the ring traverses distortion in the cylinder wall.

There is a critical time period for new or "green" engines known as the break-in period during which asperity contacts between the moving surfaces of joined components are removed or modified to allow moving surfaces to matingly conform to one another. During the break-in period, rough outer surfaces of new piston rings wear against the tiny surface scratches that exist in the cylinder wall causing high spots to be worn off, thereby properly fitting the rings in the cylinder bore. During this break-in period, the piston ring and cylinder wall interface is particularly susceptible to a condition known as scuffing, wherein there is a propensity for the piston ring to momentarily weld to the cylinder wall. Scuffing occurs when the new piston ring is in metal-to-metal contact with the cylinder wall and the piston ring expands under pressure and heat. As a result, the cylinder wall is roughened and the piston ring and cylinder wall fail to mate and form a proper seal. Accordingly, gases and oil may escape, thereby reducing the efficiency and overall useful life of the engine.

### SUMMARY

The present system and method is directed to a system for preventing scuffing of a cylinder wall by a piston ring and includes a piston ring having a surface coated with tungsten disulfide, wherein the surface is a cylinder wall engaging surface of the piston ring.

The present system and method is also directed to a system for preventing scuffing of a cylinder wall by a piston ring and includes a piston which is adapted to reciprocate within a combustion chamber of an engine. The piston has an outer surface with a circumferential groove disposed therein. A ring is disposed within the circumferential groove, the ring including a cylinder wall engaging surface coated with tungsten disulfide.

### BRIEF DESCRIPTION OF THE DRAWINGS

The accompanying drawings illustrate various embodiments of the present method and system and are a part of the specification. Together with the following description, the drawings demonstrate and explain the principles of the present method and system. The illustrated embodiments are examples of the present method and system and do not limit the scope thereof.

**Fig. 1** is a partially cutaway view of a piston disposed in a cylinder bore, the piston having one or more piston rings installed in circumferential grooves of the piston, according to one exemplary embodiment.

**Fig. 2** is a cross-sectional view of the piston rings and the piston of the present system installed in the cylinder bore, according to one exemplary embodiment.

**Fig. 3** is a partial cross-sectional view taken along lines 3-3 of Figure 1, according to one exemplary embodiment.

Throughout the drawings, identical reference numbers designate similar, but not necessarily identical, elements.

### DETAILED DESCRIPTION

The present specification describes a system and a method for reducing the amount of scuffing experienced by a green motor during break-in. More specifically, the present exemplary system and method includes disposing a lubricant such as tungsten disulfide (WS2) on a wall facing surface of a piston ring to act as a sacrificial lubrication material during an initial break-in period of the motor. Exemplary systems and structures of the present system and method will be described in further detail below.

In the present specification and in the appended claims, the term "green" or "green motor" is meant to be understood as any motor that has not yet fully performed sufficient combustion operations within one or more cylinders to remove or reduce asperity contacts between mating surfaces. Additionally, the term "break-in period" is meant to be understood as a period of initial operation of an internal combustion engine where asperity contacts between a cylinder wall and associated piston ring surfaces are removed. Removal of asperity contacts may also be referred to herein as "seating the piston rings".

In the following description, for purposes of explanation, numerous specific details are set forth in order to provide a thorough understanding of the present system for reducing the amount of scuffing experienced by a green internal combustion engine during its break-in period. It will be apparent, however, to one skilled in the art that the present method may be practiced without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

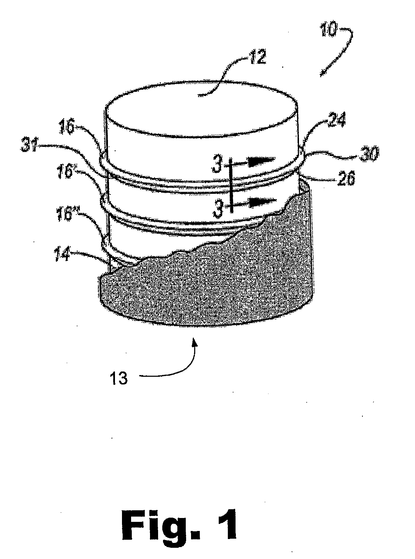

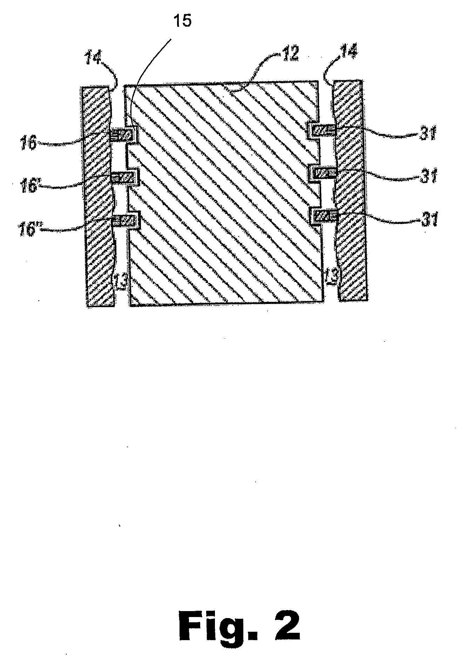

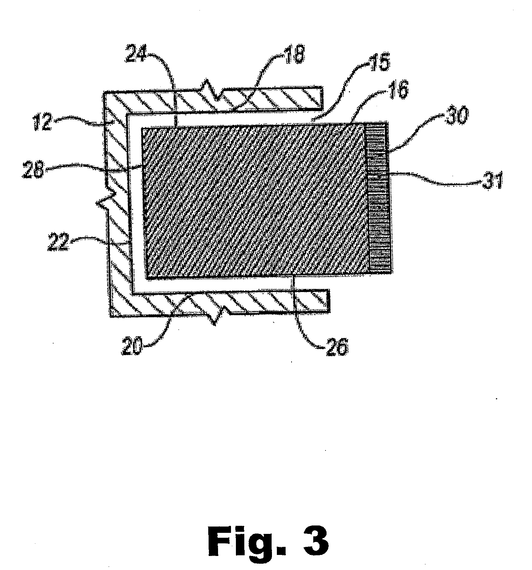

Figure 1 illustrates an exemplary system (10) including a piston (12) disposed within a cylinder bore (13) defined by a cylinder wall (14). As illustrated in Figure 1, the piston (12) is also fitted with at least one piston ring (16) having an upper radially extending surface (24), a lower radially extending surface (26), and a cylinder wall engaging surface (30). According to one exemplary embodiment, the piston ring (16) is housed within a circumferential groove (15; Fig. 3) formed in the piston (12), the circumferential groove being configured to house a piston ring (16). Moreover, as best illustrated in Figures 2 and 3, the at least one piston ring (16) includes a coating (31) on the cylinder wall engaging surface (30) of the piston ring. According to the present exemplary system (10), the coating (31) is configured to reduce the amount of scuffing experienced by the cylinder wall (14) during the piston break-in period. Further details of the above-mentioned system (10) components will be given below.

Returning again to Figure 1, the piston (12) is disposed within the cylinder bore (13) of an internal combustion engine. According to one exemplary embodiment, the cylinder bore (13), as defined by the cylinder wall (14), forms a chamber wherein fuel is combined with a charge to form rapidly expanding gases, thereby driving the piston (12) within the cylinder bore. The cylinder bore (13), and consequently the cylinder wall (14), are typically formed out of cast iron or aluminum alloy.

As shown in Figure 2, the cylinder wall (14) formed on the inner surface of the cylinder bore (13) includes a number of profile variations caused during manufacture. These profile variations are initially very abrupt, thereby forming asperity contacts between the cylinder wall (14) and the cylinder wall engaging surface (30; Fig. 1) of the piston ring (16). As mentioned previously, asperity contacts may cause metal-to-metal contact resulting in increased friction and heat during a break-in period. The increased heat causes a momentary welding at the interface points. This momentary welding often results in scuffing that produces a failed seal between the cylinder wall (14) and the piston ring (16).

Returning again to Figure 1, the piston (12) is disposed within the cylinder bore (13). While pistons (12) are typically formed out of aluminum, the present system and method may be performed with a piston fashioned out of any number of materials. Figure 2 illustrates a cross-sectional view of an exemplary piston (12) disposed within a cylinder bore (13). As illustrated in Figure 2, the piston (12) includes one or more circumferential grooves (15) formed in the wall of the piston (12), the circumferential grooves (15) being configured to receive one or more piston rings (16). Figure 3 further illustrates the one or more circumferential grooves (15) formed in the exemplary piston (12), according to one exemplary embodiment. As illustrated in Figure 3, the one or more circumferential grooves (15) are defined by upper (18) and lower (20) radially extending walls and a vertical wall (22). The distance between the substantially parallel upper (18) and lower (20) radially extending walls is associated with the size of a piston ring (16).

Typically, as illustrated in Figure 3, a piston ring (16) is installed within each of the one or more circumferential grooves (15). While the present system and method may be performed on a piston (12) having a single piston ring (16), it is not uncommon for a piston (12) to have two or more rings (16, 16', 16") to ensure efficient sealing of combustion chamber gasses and also to ensure the minimal flow of lubricating oil into the combustion chamber from the engine crank case (not shown). According to one exemplary embodiment, the piston (12) includes three circumferential grooves (15) having two piston compression rings (16, 16'), and an oil ring assembly (16") associated therewith.

As shown in the exemplary embodiment illustrated in Figure 3, the piston ring (16) includes upper and lower radially extending surfaces (24, 26), a radially inner vertical surface (28), and a radially outer cylinder wall engaging surface (30) similar to traditional piston rings. Additionally, similar to traditional piston rings, the piston ring (16) in Figure 3 may be made out of any number of materials including, but in no way limited to, cast iron, ductile iron, steel, etc. and may include a wear reducing coating on the outer surface thereof configured to engage the cylinder bore (13; Fig. 3). The wear reducing coating may be selected for its resistance to wear and relatively good scuff resistance and may include, but is in no way limited to, chrome, thermal sprays, nitride layers, or physical vapor deposition (PVD) face coatings.

However, according to the exemplary embodiment illustrated in Figure 3, the cylinder wall engaging surface (30) of the exemplary piston ring (16) also includes a coating (31) of tungsten disulfide. Coating of the cylinder wall engaging surface (30) of the exemplary piston ring (16) with a coating (31) of tungsten disulfide facilitates the free movement of the piston ring (16) relative to the walls of the cylinder bore (13; Fig. 2), eliminates metal-to-metal contact, and reduces localized contact pressure between the piston ring and the cylinder bore. The addition of the tungsten disulfide on the face of the piston ring (16) also improves the scuff resistance of the piston ring without diminishing the wear resistance. Reduction of the localized contact pressure between the piston ring (16) and the cylinder bore (13; Fig. 2) during the break-in period allows the piston ring and the cylinder wall (14; Fig. 2) to uniformly mate without scuffing, as will be described in further detail below.

Tungsten disulfide is currently marketed under the trade name of "WS2" as is commercially available from Micro Surface Corporation of Morris, Illinois (www.microsurfacecorp.com). Tungsten disulfide is a very low friction, dry lubricant that has excellent friction-and-wear properties and is normally applied to parts to reduce wear. However, in the case of the present system and method, the tungsten disulfide is used to permit the piston ring(s) (16) to move relative to the cylinder wall (14) of the cylinder bore (13) and to reduce ring to wall contact pressures, thereby preventing scuffing during the critical break-in period.

The sacrificial lamellar nature of the tungsten disulfide prevents scuffing from occurring by allowing the piston ring cylinder wall engaging surface (30) and the cylinder wall (14) of the cylinder bore (13) to move relative to one another without metal-to-metal contact and by reducing peak contact pressure. Consequently, uniform mating is promoted throughout the critical engine break-in period.

Tungsten disulfide reduces or eliminates direct contact between the piston ring (16) and the cylinder wall (14). The piston ring (16) is typically formed from cast iron, ductile iron, or steel while the cylinder wall (14) of the cylinder bore (13) is typically formed from cast iron. By separating the ring (16) and cylinder wall (14) during the critical break-in period, the heat transfer between the interfacing components is made uniform at the interface between the ring (16) and the cylinder wall (14) of the cylinder bore (13). Thus, the two surfaces conform to one another without the potentially damaging high localized pressures and temperatures which might otherwise be experienced if not for the presence of the tungsten disulfide.

According to one exemplary embodiment, the tungsten disulfide is applied to the piston ring (16) surface or surfaces rather than the cylinder wall (14) of the cylinder bore (13). Thickness and placement of the tungsten disulfide is much easier to control when deposited on the ring (16) as opposed to the wall (14) of the cylinder bore (13). Further, if the softer cast iron of the cylinder wall (14) were coated, tungsten disulfide may undesirably separate during the critical break-in period, and the cost to coat the cylinder wall (14) would greatly exceed the cost to coat a surface of the piston ring (16). In some extremely demanding applications, the upper and lower radially extending surfaces (24, 26), and the radially inner vertical surface (28) of the piston ring (16), may be coated with tungsten disulfide. However, current testing indicates that in most applications, coating the cylinder wall engaging surface (30) of the piston ring (16) with tungsten disulfide is sufficient to prevent scuffing during the break-in period while providing some long term scuffing protection after the break-in period has expired.

According to the present system and method, the tungsten disulfide may be applied to one or more surfaces of the piston ring (16) using any number of application methods currently known in the art. According to one exemplary embodiment, application methods may include, but are in no way limited to, molecular bonding at atmospheric pressure or pressurized air application methods with or without the use of heat, binders, or adhesives. Additionally, while the tungsten disulfide may be deposited at a number of thicknesses, the tungsten disulfide coating (31) is deposited onto the cylinder wall engaging surface (30) of the piston ring (15) in a thickness of 0.5 microns, according to one exemplary embodiment.

In operation, the piston (12) having the tungsten disulfide coated piston ring (16) is caused to cycle with the intake, expansion, compression, and exhaust strokes of the system (10). During an intake and expansion stroke, the piston (12) is drawn downward into the cylinder bore (13) as fuel and air are received in the cylinder bore (13) above the piston. As the piston (12) is drawn downward, the cylinder wall engaging surface (30) of the piston rings (16) pass along the cylinder wall (14). As the cylinder wall engaging surface (30) passes along the cylinder wall (14), the asperity contacts that typically induce scuffing are contacted. However, according to one exemplary embodiment, the lamellar tungsten disulfide coating (31) functions as a sacrificial lubricant by being transferred from the cylinder wall engaging surface (30) to the cylinder wall (14), preventing metal-to-metal contact, and as a result, preventing scuffing of the cylinder wall (14).

Similarly, when the piston (12) enters its compression and exhaust stroke, the piston is powered upwards through the cylinder bore (13). As mentioned above, as the piston (12) is translated through the cylinder bore (13), the cylinder wall engaging surface (30) of the piston ring (16) engages the cylinder wall (14), rapidly removing the initially present asperity contacts while preventing scuffing of the cylinder wall (14). As the above-mentioned piston (12) cycle is performed, the lubricating action of the tungsten disulfide coating (31) prevents metal-to-metal contact and scuffing until the asperity contacts between the piston rings (16) and the cylinder walls (14) are eliminated, which elimination occurs after a very short number of cycles. Upon removal of the asperity contacts between the piston rings (16) and the cylinder walls (14), the mating surfaces conform to one another and a tight mechanical fit exists between the piston rings and the cylinder walls, thereby providing an effective seal of the fluids and gasses present in the system (10).

In conclusion, the present system and method include forming a piston ring having a cylinder wall engaging surface, and forming a coating of tungsten disulfide on the cylinder wall engaging surface of the piston ring. The coating of tungsten disulfide on the cylinder wall engaging surface of the piston ring allows the piston ring to be translated over a cylinder wall (14) during an initial break-in period while allowing mating surfaces to conform to one another, thereby forming a tight mechanical seal.

The preceding description has been presented only to illustrate and describe the present method and system. It is not intended to be exhaustive or to limit the present method and system to any precise form disclosed. Many modifications and variations are possible in light of the above teaching.

The foregoing embodiments were chosen and described in order to illustrate principles of the method and system as well as some practical applications. The preceding description enables others skilled in the art to utilize the method and system in various embodiments and with various modifications as are suited to the particular use contemplated. It is intended that the scope of the method and system be defined by the following claims.

## Claims

1. A system for preventing scuffing of a cylinder wall comprising:
a piston ring, said piston ring including a surface;
wherein said surface of said piston ring is coated with tungsten disulfide.

2. The system of claim 1, wherein said piston ring further includes a cylinder wall engaging surface;
wherein only said cylinder wall engaging surface of said piston ring is coated with tungsten disulfide.

3. The system of claim 1, wherein said piston ring comprises one of ductile iron, cast iron, or steel.

4. The system of claim 1, wherein said piston ring comprises a wear resistant coating disposed between said piston ring and said coating of tungsten disulfide.

5. The system of claim 1, further comprising:
a piston, said piston including one or more circumferential groves;
wherein said circumferential grooves are configured to receive said piston ring.

6. The system of claim 1, wherein said coating of tungsten disulfide is approximately 0.5 microns thick.

7. The system of claim 1, wherein said tungsten disulfide comprises a dry lubricant.

8. A piston ring having a cylinder wall engaging surface comprising:
a first material forming said ring; and
a second material coating said cylinder wall engaging surface;
wherein said second material comprises tungsten disulfide.

9. The piston ring of claim 8, wherein said first material comprises one of cast iron or steel.

10. The piston ring of claim 8, wherein said tungsten disulfide comprises a dry lubricant.

11. The piston ring of claim 8, wherein all surfaces of said first material are coated by said second material.

12. The piston ring of claim 8, wherein said coating of tungsten disulfide is approximately 0.5 microns thick.

13. The piston ring of claim 8, wherein said coating of tungsten disulfide is applied to said wall engaging surface by molecular bonding at atmospheric pressure or by a pressurized air application method.

14. The piston ring of claim 8, further comprising a third material disposed between said first material and said second material;
wherein said third material comprises a wear resistant coating.

15. The piston ring of claim 14, wherein said wear resistant coating comprises one of a chrome face coating, a thermal spray, a nitride layer, or a physical vapor deposition face coating.

16. A system for preventing a scuffing of a cylinder wall by a piston ring comprising:
a piston ring, said piston ring having a cylinder wall engaging surface; and
a coating disposed on said cylinder wall engaging surface of said piston ring, said coating being configured to reduce friction between said piston ring and the cylinder wall.

17. The system of claim 16, wherein said coating comprises tungsten disulfide.

18. The system of claim 17, wherein said coating of tungsten disulfide is approximately 0.5 microns thick on said cylinder wall engaging surface.

19. The system of claim 16, wherein said coating comprises a dry sacrificial lubricant.

20. A system for preventing scuffing of a cylinder wall comprising:
a cylinder bore having a circumferential cylinder wall;
a piston disposed within said cylinder bore, said piston including walls extending radially inwardly from an outer radial surface of said piston, said walls defining a circumferential groove; and
a piston ring disposed within said circumferential groove, said piston ring including a cylinder wall engaging surface having a coating of tungsten disulfide.

21. The system of claim 20, wherein said cylinder bore comprises a green cylinder bore.

22. The system of claim 20, wherein said coating of tungsten disulfide comprises a dry lubricant;
said coating of tungsten disulfide being approximately 0.5 microns thick.

23. The system of claim 20, wherein said tungsten disulfide is configured to prevent a metal-to-metal contact between said piston ring and said cylinder bore during a removal of asperity contacts.

24. A method for preventing scuffing of a cylinder wall comprising coating a surface of a piston ring with tungsten disulfide.

25. The method of claim 24, wherein said surface of said piston ring comprises a cylinder wall engaging surface of said piston ring.

26. The method of claim 24, wherein said coating a surface of a piston ring with tungsten disulfide comprises applying said tungsten disulfide to said surface by molecular bonding at atmospheric pressure or by a pressurized air application method.
